# DEMANDE DE BREVET EUROPEEN

(11) **EP 1 669 570 A2**
(43) Date de publication de la demande: **14.06.2006**
(21) Numéro de dépôt: 05300997.3
(22) Date de dépôt: 02.12.2005
(51) Int. Cl.: F01P 7/16, F28F 27/02

(54) **Système de refroidissement pour chaine de traction hybride de vehicule automobile**

(30) Priorité: 03.12.2004 FR 0412895
(71) Demandeur: Renault SAS, 92100 Boulogne Billancourt (FR)
(72) Inventeur: Yu, Robert, 78990, Elancourt (FR); Rouaud, Cédric, 92370, Chaville (FR)

(57) **Abrégé**

Système de refroidissement pour chaîne de traction hybride de véhicule automobile comprenant un moteur thermique (1) et une chaîne de traction électrique (2), pouvant être refroidis par un fluide caloporteur circulant dans un circuit de refroidissement comportant un radiateur (5) capable de refroidir le fluide caloporteur par échange thermique avec un flux d'air, le radiateur présentant un circuit principal avec une entrée (7) reliée à la sortie du moteur thermique et une sortie principale (9) reliée à l'entrée du moteur thermique, et un circuit auxiliaire communicant avec le circuit principal et muni d'une sortie auxiliaire (12), une vanne mélangeuse thermostatique à trois voies (20) étant reliée d'une part à la sortie auxiliaire (12) du radiateur et d'autre part à une branche de dérivation (21) du fluide provenant du moteur thermique, la dite vanne mélangeuse étant également reliée par une sortie (37) à la chaîne de traction électrique (2), caractérisé par le fait que le circuit de refroidissement comprend, dans une branche reliant la sortie du moteur thermique (1) au radiateur (5), une vanne thermostatique principale (25), ladite vanne principale étant montée entre le piquage de la branche de dérivation (21) et le radiateur (5).

## Description

La présente invention est relative à un système de refroidissement pour une chaîne de traction hybride de véhicule automobile.

Un véhicule à propulsion ou traction hybride est équipé d'une première source de propulsion et/ou d'un générateur d'électricité comprenant un moteur thermique et d'une seconde source de propulsion et/ou de transformation d'énergie électrique en énergie mécanique matérialisée par un ou plusieurs moteurs électriques.

Le moteur thermique et les moteurs électriques ainsi que les composants électroniques de puissance contrôlant le fonctionnement des moteurs électriques ne nécessitent pas le même degré de refroidissement pour fonctionner dans des conditions optimales. Les plages de températures des fluides caloporteurs circulant dans les circuits de refroidissement des différents éléments ne sont pas les mêmes. Ainsi, la température du fluide de refroidissement à l'entrée des composants électroniques ne doit pas dépasser environ 80°C. La température à l'entrée du moteur électrique ou de l'échangeur de chaleur entre l'eau et l'huile de refroidissement des moteurs électriques ne doit pas excéder en général environ 90°C. La température du fluide de refroidissement à l'entrée du moteur thermique ne doit pas excéder 105°C environ.

Pour résoudre les difficultés résultant de ces différences de température, on peut utiliser des circuits de refroidissement distincts. Un premier circuit est alors utilisé pour le refroidissement du moteur thermique. Ce circuit correspond au circuit conventionnel de refroidissement d'un moteur thermique dans un véhicule classique et est équipé d'un premier radiateur. Un second circuit peut alors être prévu pour le refroidissement de la chaîne de traction électrique comprenant au moins un moteur électrique et différents composants électroniques de puissance. Un tel système de refroidissement présente un premier inconvénient tenant au fait que la pompe de circulation du second circuit de refroidissement de la chaîne de traction électrique doit fonctionner en permanence. Un autre inconvénient est dû à la position du radiateur du deuxième circuit de refroidissement qui est généralement placé devant le radiateur du premier circuit de refroidissement, entraînant ainsi des pertes de charge supplémentaires sur le flux d'air de refroidissement. De plus, un tel système ne permet pas le préchauffage du moteur thermique ou le maintien en température du fluide de refroidissement du moteur thermique lorsque celui-ci est à l'arrêt.

La demande de brevet japonais JP 102 66 855 (Toyota) décrit un système de refroidissement pour chaîne de traction hybride de véhicule automobile comportant un radiateur à deux entrées et deux sorties définissant ainsi un circuit principal pour le refroidissement du moteur thermique et un circuit auxiliaire pour le refroidissement de la chaîne de traction électrique. Un tel système de refroidissement ne présente pas la souplesse nécessaire à un fonctionnement optimal dans toutes les conditions de fonctionnement du véhicule.

La demande de brevet allemand DE 1973 0678 décrit un système de refroidissement pour chaîne de traction hybride dans lequel le refroidissement de la chaîne de traction électrique est obtenu au moyen d'un simple circuit de dérivation muni d'une pompe de circulation branchée sur le circuit de refroidissement principal.

Le brevet US 5 531 285 décrit un montage analogue dans lequel le circuit de refroidissement de la chaîne de traction électrique est simplement branché en parallèle sur le circuit de refroidissement principal du moteur thermique, un seul radiateur étant utilisé.

Ces documents antérieurs utilisent donc le circuit de refroidissement conventionnel du moteur thermique pour refroidir les composants électroniques des moteurs électriques de la chaîne de traction électrique, ce qui ne permet pas d'atteindre un refroidissement suffisant pour l'ensemble des composants de la chaîne de traction électrique.

Le brevet US 6196168 (BMW) décrit un système de refroidissement et de préchauffage de l'huile d'une transmission automatique de véhicule automobile. Dans le dispositif décrit, on utilise un radiateur comportant deux sorties, un échangeur huile/eau et un système de vannes pour refroidir ou chauffer l'huile de la transmission automatique.

Les demandes de brevet français 2 815 401 et 2 815 402 (Renault) ont déjà préconisé, pour le refroidissement d'une chaîne de traction hybride de véhicule automobile, l'utilisation d'un seul circuit de refroidissement pour le moteur thermique à haute température (90 à 115°C) et pour le refroidissement des composants de la chaîne de traction électrique à plus basse température (70 à 80°C environ). Dans ces deux documents, il a été proposé d'utiliser un radiateur présentant une seule entrée et deux sorties de façon à définir un circuit principal et un circuit auxiliaire, le circuit auxiliaire permettant l'obtention d'un refroidissement à température plus basse pour les organes des composants électroniques et la ou les machines électriques de la chaîne de traction électrique. Une vanne électrique à quatre voies associée à une vanne électrique à trois voies permettent de gérer l'ensemble du système de refroidissement et d'obtenir notamment pour le fluide caloporteur les températures requises à la fois pour le moteur thermique et pour les composants de la chaîne de traction électrique. Toutefois, les électrovannes nécessaires sont relativement coûteuses compte tenu de leur structure complexe.

Dans la demande de brevet français 2 815 402, il a été proposé une variante n'utilisant aucune électrovanne. Toutefois la température du fluide caloporteur traversant le moteur thermique ne peut pas être contrôlée avec précision dans cette variante et elle peut, dans certains cas, être trop basse pour le moteur thermique.

La demande de brevet français 2844224 (Renault) décrit un perfectionnement utilisant une simple vanne électrostatique à deux voies associée à une vanne thermostatique à trois voies. Toutefois, la vanne thermostatique à deux voies utilisée dans ce document doit être placée dans le circuit de refroidissement à un endroit particulier. Elle doit être conçue pour s'ouvrir à des températures relativement basses. L'adaptation d'une telle structure pour un système de refroidissement d'un véhicule à chaîne de traction hybride entraîne donc des coûts non négligeables et la présente invention a pour objet d'améliorer encore un tel système de refroidissement en conservant les avantages obtenus dans la demande de brevet français 2 844 224 mais au moyen d'un dispositif de structure plus simple et donc de coût plus faible.

La présente invention a donc pour objet de permettre la réalisation d'un système de refroidissement pour un véhicule à chaîne de traction hybride qui ne nécessite que des modifications minimes par rapport à un système de refroidissement classique utilisé dans un véhicule à traction classique muni d'un seul moteur thermique.

La présente invention a également pour objet un système de refroidissement pour un véhicule à chaîne de traction hybride qui permette le préchauffage du moteur thermique et son maintien en température même lorsque ledit moteur thermique est à l'arrêt.

A cet effet, dans un mode de réalisation, le système de refroidissement pour chaîne de traction hybride de véhicule automobile comprenant un moteur thermique et une chaîne de traction électrique, pouvant être refroidis par un fluide caloporteur, comprend un circuit de refroidissement dans lequel circule le fluide caloporteur. Le circuit de refroidissement comporte un radiateur capable de refroidir le fluide caloporteur par échange thermique avec un flux d'air. Le radiateur présente un circuit principal avec une entrée reliée à la sortie du moteur thermique et une sortie principale reliée à l'entrée du moteur thermique, et un circuit auxiliaire communiquant avec le circuit principal et muni d'une sortie auxiliaire. Une vanne mélangeuse thermostatique à trois voies est reliée, d'une part à la sortie auxiliaire du radiateur et, d'autre part à une branche de dérivation du fluide provenant du moteur thermique. La vanne mélangeuse est également reliée par une sortie à la chaîne de traction électrique. Le circuit de refroidissement comprend en outre, dans une branche reliant la sortie du moteur thermique au radiateur, et une vanne thermostatique principale, ladite vanne principale étant montée entre le piquage de la branche de dérivation et le radiateur.

Une telle disposition permet un refroidissement optimal dans toutes les configurations de fonctionnement et ne nécessite qu'une modification minimale de structure par rapport à un véhicule classique muni d'un unique moteur thermique. La vanne thermostatique principale est en effet identique au thermostat habituel utilisé dans un véhicule classique et se trouve disposée également en sortie du moteur thermique.

Avantageusement, la vanne mélangeuse thermostatique à trois voies est du type à double effet. La vanne mélangeuse est ainsi capable de bloquer le passage vers la sortie auxiliaire du radiateur lorsque la température du fluide caloporteur qui la traverse est inférieure à une première température et de bloquer le passage en provenance du moteur thermique lorsque la température du fluide caloporteur qui la traverse est supérieure à une deuxième température. Enfin, la vanne mélangeuse réalise un mélange du fluide caloporteur en provenance du moteur thermique et du circuit auxiliaire du radiateur, lorsque la température du fluide caloporteur qui la traverse est comprise entre la première et la deuxième température.

Avantageusement également, la vanne thermostatique principale est adaptée pour bloquer le passage du fluide caloporteur lorsque sa température est inférieure à une troisième température supérieure à la deuxième température et pour s'ouvrir lorsque la température du fluide caloporteur qui la traverse est supérieure à une quatrième température supérieure à la troisième température.

Le circuit de refroidissement comprend de préférence une boucle principale incluant le moteur thermique, une première pompe de circulation, le circuit principal du radiateur et la vanne thermostatique principale.

Dans un mode de réalisation, des branches de dérivation sont montées en parallèle sur la boucle principale pour un échange thermique dans des organes auxiliaires tels qu'un radiateur de chauffage de l'habitacle du véhicule et/ou un bocal de dégazage pour le fluide caloporteur.

Le circuit de refroidissement comprend de préférence également une boucle secondaire incluant la chaîne de traction électrique, une deuxième pompe de circulation, le circuit auxiliaire du radiateur et la vanne mélangeuse.

Pour le fonctionnement de l'ensemble, le système de refroidissement peut comprendre avantageusement une unité de commande recevant des informations sur la température du fluide caloporteur en différents points du système et capable d'actionner sélectivement les pompes de circulation et/ou un ventilateur associé au radiateur.

L'invention sera mieux comprise à l'étude d'un mode de réalisation pris à titre d'exemple nullement limitatif et illustré par les dessins annexés sur lesquels :
- la figure 1 illustre schématiquement les principaux éléments d'un système de refroidissement selon l'invention ;
- les figures 2 à 4 illustrent schématiquement une vanne thermostatique mélangeuse à trois voies utilisée dans le système de refroidissement de l'invention dans trois positions différentes ;
- les figures 5 et 6 illustrent schématiquement une vanne thermostatique à deux voies utilisée dans le système de refroidissement selon l'invention dans deux positions différentes ;
- la figure 7 montre l'écoulement du fluide caloporteur dans le cas où seul le moteur thermique est en fonctionnement, lors d'un démarrage à froid ;
- la figure 8 illustre l'écoulement du fluide caloporteur lorsque seul le moteur thermique est en fonctionnement, à chaud ;
- la figure 9 illustre l'écoulement du fluide caloporteur lorsque seule la chaîne de traction électrique est en fonctionnement, lors d'un démarrage à froid ;
- la figure 10 illustre l'écoulement du fluide caloporteur lors d'un fonctionnement hybride, le moteur thermique et la chaîne de traction électrique étant en fonctionnement lors d'un démarrage à froid ;
- la figure 11 illustre l'écoulement du fluide caloporteur lorsque seule la chaîne de traction électrique est en fonctionnement, dans une phase de fonctionnement à chaud ;
- la figure 12 illustre l'écoulement du fluide caloporteur en fonctionnement hybride, le moteur thermique et la chaîne de traction électrique étant en fonctionnement pour une température intermédiaire ; et
- la figure 13 illustre l'écoulement du fluide caloporteur dans le cas d'un fonctionnement hybride à haute température.

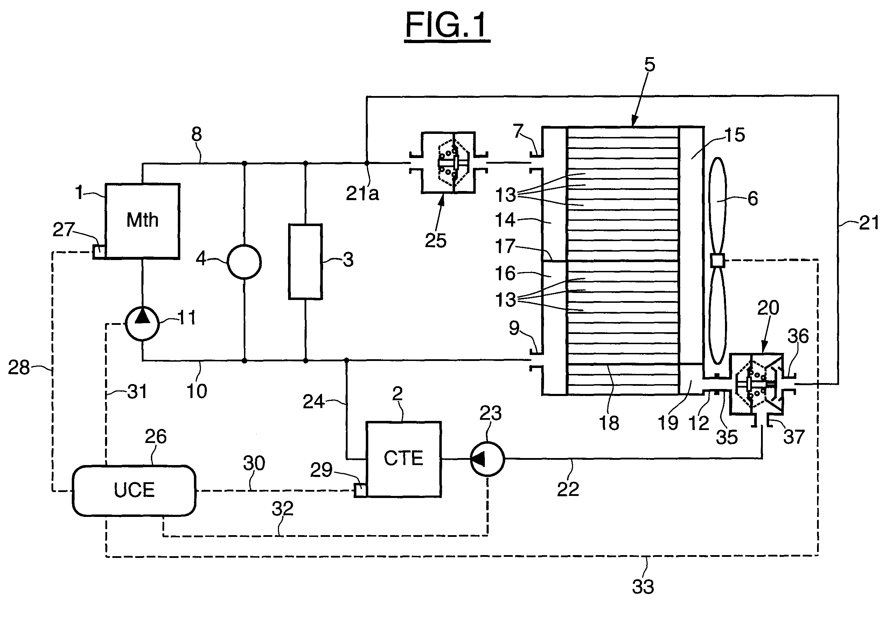

Le circuit de refroidissement illustré schématiquement sur la figure 1 est destiné au refroidissement d'une chaîne de traction ou de propulsion hybride d'un véhicule automobile qui comporte d'une part, un moteur thermique M_{TH} référencé 1 et d'autre part, une chaîne de traction ou de propulsion électrique CTE référencée 2 qui peut comprendre un ou plusieurs moteurs électriques associés à des composants électroniques de puissance. On a également représenté sur la figure 1, un radiateur 3 pour le chauffage de l'habitacle du véhicule et un bocal de dégazage 4 pour le fluide caloporteur s'écoulant dans le circuit de refroidissement, montés en parallèle par rapport au moteur thermique 1.

Un radiateur unique 5 pouvant être soumis à un flux d'air mis en mouvement par un ventilateur 6 comprend une entrée 7 reliée par la conduite 8 à la sortie du moteur thermique 1. Le radiateur 5 comporte une sortie principale 9 reliée par la conduite 10 à l'entrée du moteur thermique 1 avec interposition d'une première pompe de circulation 11. Le radiateur 5 présente également une sortie auxiliaire 12.

Le radiateur 5 présente un circuit principal à plusieurs passes de multiples canaux parallèles 13 dédiés au refroidissement du moteur thermique 1. A cet effet, le radiateur 5 comprend en effet une boîte d'entrée 14 munie de l'entrée 7, une boîte de déviation 15 et une boîte de sortie 16 communiquant avec la sortie principale 9. Les boîtes d'entrée 14 et de sortie 16 sont séparées par une paroi étanche 17.

De cette manière, le fluide caloporteur qui pénètre par l'entrée 7 traverse tout d'abord dans un sens différents canaux parallèles 13 avant de revenir par la boîte de déviation 15 pour traverser à nouveau des canaux 13 dans l'autre sens avant d'aboutir dans la boîte de sortie 16 pour sortir par la sortie principale 9.

Le radiateur 5 présente également un circuit auxiliaire communiquant avec le circuit principal par la boîte de sortie 16. Le circuit auxiliaire est défini par une plaque de séparation étanche 18 qui isole une boîte de sortie auxiliaire 19 communiquant avec la sortie auxiliaire 12. Le circuit auxiliaire ainsi défini met en communication la boîte de sortie 16 et la sortie principale 9 avec la boîte de sortie auxiliaire 19 et la sortie auxiliaire 12.

Comme on le verra plus loin, dans certains modes de fonctionnement, le fluide caloporteur qui s'est écoulé dans le radiateur 5 selon le circuit principal peut encore subir un refroidissement supplémentaire dans le circuit auxiliaire, ce qui abaisse sa température avant la sortie par la sortie auxiliaire 12.

Une vanne mélangeuse thermostatique à trois voies référencée 20 sur la figure 1 est montée à la sortie auxiliaire 12. La vanne 20 est d'autre part reliée à une branche de dérivation 21 piquée au point 21a sur la conduite 8. La vanne mélangeuse 20 présente une sortie 21 reliée par la conduite 22 à une deuxième pompe de circulation 23 et à la chaîne de traction électrique 2. Le retour du fluide caloporteur ayant traversé la chaîne de traction électrique 2 se fait par la conduite 24 piquée sur le conduite 10.

Une vanne thermostatique principale à deux voies 25 est montée entre le piquage 21a et le radiateur 5 sur la conduite 8.

Il apparaît ainsi que le circuit de refroidissement comprend une boucle principale dans laquelle se trouvent le moteur thermique 1 et le radiateur 5 ainsi que la première pompe de circulation 11 et la vanne thermostatique à deux voies 25. Le bocal de dégazage 4 et le radiateur 3 pour le chauffage de l'habitacle du véhicule sont montés en parallèle sur les deux branches 8 et 10 de cette boucle principale. Deux dérivations sont prévues sur la boucle principale, à savoir la dérivation 21 et la dérivation 22, laquelle comprend la chaîne de traction électrique et la deuxième pompe de circulation 23. La vanne mélangeuse 20 assure la liaison, selon sa position, entre les dérivations respectives 21 et 22 et la boucle principale par l'intermédiaire du circuit auxiliaire défini dans le radiateur 5.

Le fonctionnement du système dans son ensemble est assuré par une unité de commande électronique UCE référencée 26 sur la figure 1. Cette unité de commande reçoit des informations en provenance d'un capteur de température 27 qui mesure la température de l'eau de refroidissement en sortie du moteur thermique 1, le capteur 27 étant relié à l'unité de commande 26 par la connexion 28. La température du fluide caloporteur en entrée de la chaîne de traction électrique 2 est également mesurée par un capteur 29 relié à l'unité de commande 26 par une connexion 30. La première pompe 11 peut être commandée, si elle est électrique, par l'unité de commande 26 par l'intermédiaire d'une connexion 31. La deuxième pompe 23 est commandée par l'unité de commande par l'intermédiaire d'une connexion 32. Enfin, le ventilateur 6 est commandé par l'unité de commande 26 par l'intermédiaire d'une connexion 33.

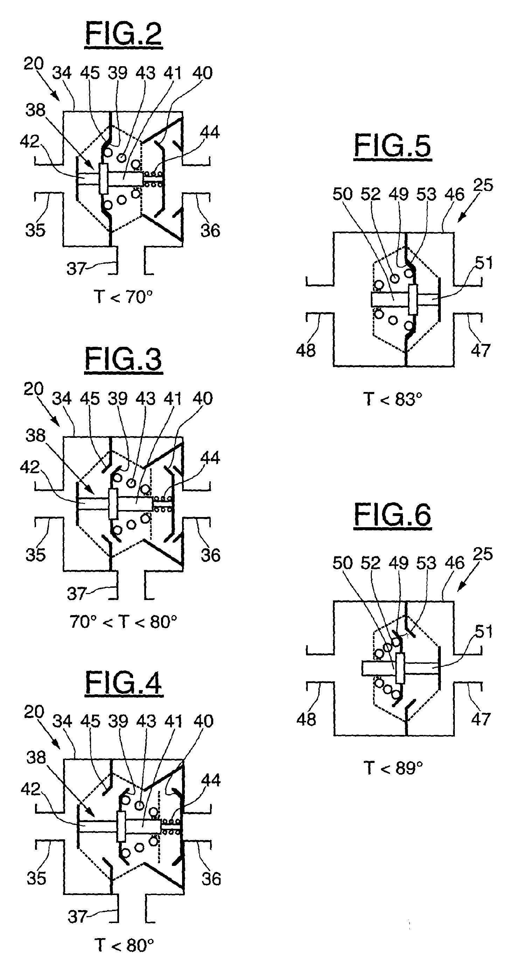

On comprendra mieux la structure de la vanne mélangeuse 20 à l'examen des figures 2 à 4 qui montrent schématiquement un exemple de réalisation d'une telle vanne mélangeuse thermostatique à trois voies. Les figures 2 à 4 représentent une coupe longitudinale d'une telle vanne thermostatique à cire à double clapet. La vanne 20 comprend un boîtier 34 rigide et étanche présentant deux entrées 35, 36 opposées l'une à l'autre et une sortie 37 en direction perpendiculaire auxdites entrées 35, 36. L'une des entrées 36 reçoit le fluide caloporteur provenant du moteur thermique 1 par la dérivation 21. L'entrée opposée 35 reçoit le fluide caloporteur refroidi par le circuit auxiliaire de refroidissement du radiateur 5 et provenant de la boîte de sortie auxiliaire 19. A l'intérieur du boîtier 34 est logé un thermostat à cire 38 possédant deux clapets 39 et 40 disposés chacun à une extrémité d'un bulbe de cire 41 qui peut se déplacer le long d'une tige 42 solidaire du boîtier 34 sous l'effet de la température du fluide baignant le bulbe 41. Des ressorts 43 et 44 maintiennent les clapets 39 et 40 solidaires du bulbe de cire 41 contre le siège fixe 45 et ramènent le clapet 39 vers son siège 45 lorsque la cire se contracte. A titre d'exemple, il est possible de concevoir la vanne mélangeuse 20 de façon que, lorsque la température du fluide caloporteur qui la traverse est inférieure à une première température qui peut être par exemple de 70°C, le clapet 39 est poussé contre son siège 45 par le ressort 43 de sorte que le passage en provenance de l'entrée 35 venant de la sortie auxiliaire 12 du radiateur 5 est bloqué. Dans cette position qui est illustrée sur la figure 2, le passage provenant de l'entrée 36 venant du moteur thermique est au contraire libéré, le fluide caloporteur pouvant traverser la vanne mélangeuse 20 depuis l'entrée 36 vers la sortie 37.

Lorsque la température du fluide caloporteur qui traverse la vanne 20 est comprise entre la première température, par exemple 70°C, et une deuxième température, par exemple 80°C, la vanne 20 se place dans la position illustrée sur la figure 3. Dans cette position, la cire s'est dilatée dans le bulbe 41 qui a glissé le long de la tige 42. Les clapets 39 et 40 qui sont disposés perpendiculairement à ladite tige 42 se sont déplacés le long de cette tige. Dans cette position, le fluide caloporteur provenant de l'entrée 35 peut se mélanger dans la vanne 20 avec le fluide caloporteur provenant de l'entrée 36, le mélange sortant par la sortie 37.

Lorsque la température du fluide caloporteur continue à augmenter, les deux clapets 39 et 40 poursuivent leur déplacement de sorte que le clapet 40 vient finalement obturer l'entrée 36 dans la position illustrée sur la figure 4 qui correspond à une température du fluide caloporteur supérieure à la deuxième température, par exemple 80°C. Dans cette position, seul le fluide caloporteur provenant de l'entrée 35 peut pénétrer dans la vanne 20 pour ressortir par la sortie 37.

On comprendra bien entendu que la vanne mélangeuse 20 puisse être réalisée de manière différente, par exemple au moyen de deux thermostats à cire logés dans un boîtier unique ou tout autre structure qui permette effectivement d'obturer alternativement les entrées 35 et 36 et de maintenir une position intermédiaire pour laquelle les fluides provenant des entrées 35 et 36 sont mélangés dans la vanne 20.

Un mode de réalisation de la vanne thermostatique principale 25 est illustré schématiquement sur les figures 5 et 6. La vanne 25 présente un bâti rigide 46 muni d'une entrée 47 et d'une sortie opposée 48. L'entrée 47 peut recevoir le fluide caloporteur provenant du moteur thermique. La sortie 48 est reliée à l'entrée principale 7 du radiateur 5. A l'intérieur du bâti 46 est monté un thermostat à cire à simple clapet 49 fixé à l'extrémité d'un bulbe de cire 50 qui peut se déplacer le long d'une tige 51 solidaire du boîtier 46. Un ressort 52 permet le maintien du clapet 49 contre son siège fixe 53.

Dans le mode de réalisation illustré, la vanne 25 est fermée lorsque la température du fluide caloporteur est inférieure à une troisième température, par exemple 83°C. Dans cette position, illustrée sur la figure 5, la vanne 25 bloque tout passage entre son entrée 47 et sa sortie 48, le clapet 49 étant appuyé sur son siège 53.

Lorsque la température du fluide caloporteur dépasse une quatrième température, par exemple 95 °C, la vanne thermostatique 25 est complètement ouverte, comme illustré sur la figure 6, le clapet 49 étant éloigné de son siège 53 et laissant lasser le fluide caloporteur depuis l'entrée 47 jusqu'à la sortie 48.

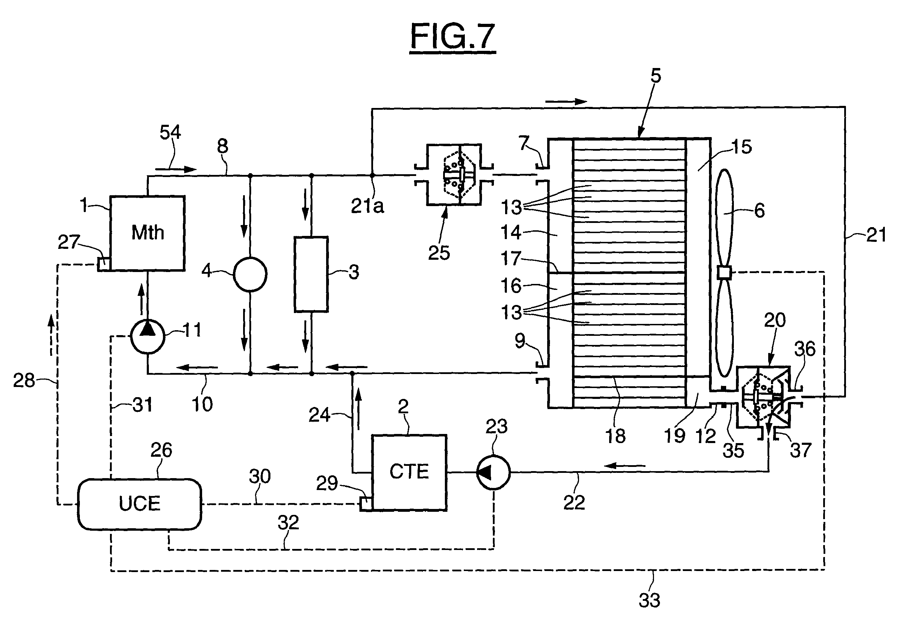

On va maintenant expliquer le fonctionnement du système et l'écoulement du fluide caloporteur dans différentes configurations illustrées sur les figures 7 à 13.

La figure 7 illustre le fonctionnement du véhicule hybride en mode thermique pur à froid, c'est-à-dire lors d'un démarrage à froid utilisant uniquement le moteur thermique, la chaîne de traction électrique restant inactive. La circulation du fluide caloporteur est illustrée par les flèches 54. Dans ce mode de fonctionnement, la deuxième pompe de circulation 23 est arrêtée. Au contraire la première pompe de circulation 11 est en fonctionnement, son régime étant lié à celui du moteur thermique. Le fluide caloporteur mis en circulation par la pompe 11 traverse le moteur thermique 1, le bocal de dégazage 4, et le radiateur de chauffage 3 pour l'habitacle du véhicule et revient à la pompe de circulation 11. Le fluide caloporteur ne peut traverser la vanne thermostatique 25 qui est fermée tant que la température du fluide caloporteur reste inférieure à 83°C. Le fluide caloporteur ne traverse donc pas le radiateur 5 et le ventilateur 6 reste inactif. Le fluide caloporteur peut également s'écouler par la branche de dérivation 21, traverser la vanne mélangeuse 20, rejoindre la branche de dérivation 22 et traverser la chaîne de traction électrique avant de revenir sur le circuit principal de refroidissement par la conduite 10.

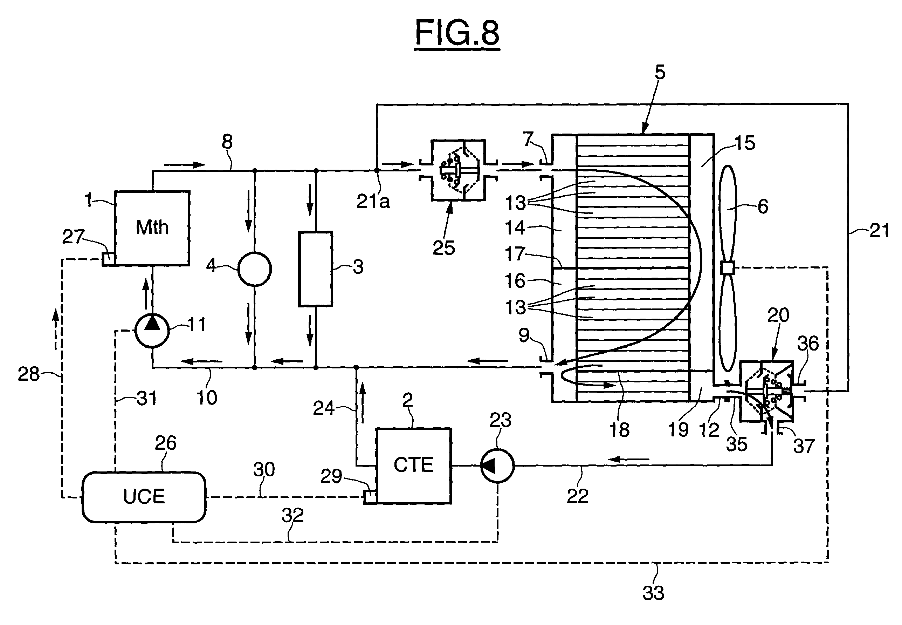

La figure 8 illustre le même fonctionnement en mode thermique pur à chaud. Le moteur thermique est donc toujours actif et la chaîne de traction électrique inactive. Comme sur la figure 7, la première pompe de circulation 11 est active tandis que la deuxième pompe de circulation 23 est inactive. La température du fluide caloporteur a ici dépassé 83°C, ce qui a entraîné l'ouverture de la vanne thermostatique principale 25. Le fluide caloporteur traverse donc le radiateur 5. Le ventilateur 6 peut être mis en marche par l'unité de commande 26. Compte tenu de la température élevée du fluide caloporteur, supérieure à 80°C, la vanne mélangeuse 20 a bloqué sa deuxième entrée 36, empêchant l'arrivée du fluide caloporteur à haute température provenant de la branche de dérivation 21. De cette manière, on évite que le fluide caloporteur à haute température puisse détériorer les composants de la chaîne de traction électrique 2. Au contraire, le fluide caloporteur qui subit un deuxième refroidissement dans le circuit auxiliaire du radiateur 5 peut traverser la vanne mélangeuse 20 et sortir par sa sortie 37 de façon à s'écouler par la dérivation 22 en traversant la chaîne de traction électrique 2 pour revenir par la conduite 24 et la conduite 10 sur le circuit principal de refroidissement du moteur thermique 1. On voit que le refroidissement du moteur thermique 1 est assuré à la température optimale définie par la vanne thermostatique 25 et le circuit principal du radiateur 5. Le fluide caloporteur qui traverse néanmoins la chaîne de traction électrique est à une température inférieure, compatible avec les composants de la chaîne de traction électrique.

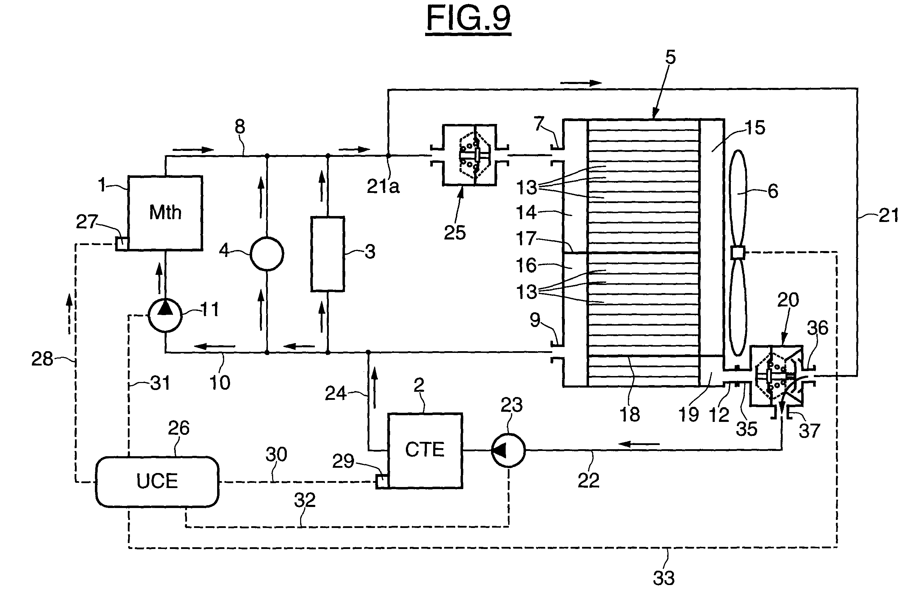

La figure 9 illustre un fonctionnement du système en mode électrique pur à froid. Dans une telle configuration, le moteur thermique est inactif et la traction du véhicule est assurée uniquement par la chaîne de traction électrique 2. Lors d'un tel démarrage à froid, la pompe de circulation 23 est mise en marche, la première pompe de circulation 11 peut être inactive ou, selon les cas, être également mise en marche. La vanne thermostatique principale 25 est en position fermée, la température du fluide caloporteur étant inférieure à 83°C, sa température d'ouverture. De la même manière, la température du fluide caloporteur étant inférieure à 70°C, la vanne mélangeuse 20 est dans une position où elle bloque la première entrée 35 et ouvre uniquement la deuxième entrée 36 connectée à la dérivation 21. Le fluide caloporteur traverse donc la chaîne de traction électrique 2 en étant mis en circulation par la pompe 23. Le fluide caloporteur traverse également le moteur thermique 1, ce qui permet un préchauffage de celui-ci, puis revient par la dérivation 21 et la vanne mélangeuse 20 sur la chaîne de traction électrique 2. On notera que le fluide caloporteur traverse également le bocal de dégazage 4 et le radiateur 3 pour l'habitacle du véhicule mais dans un sens opposé à celui des figures 7 et 8. Grâce au préchauffage du moteur thermique 1, celui-ci consommera moins et émettra donc moins de gaz polluants après démarrage.

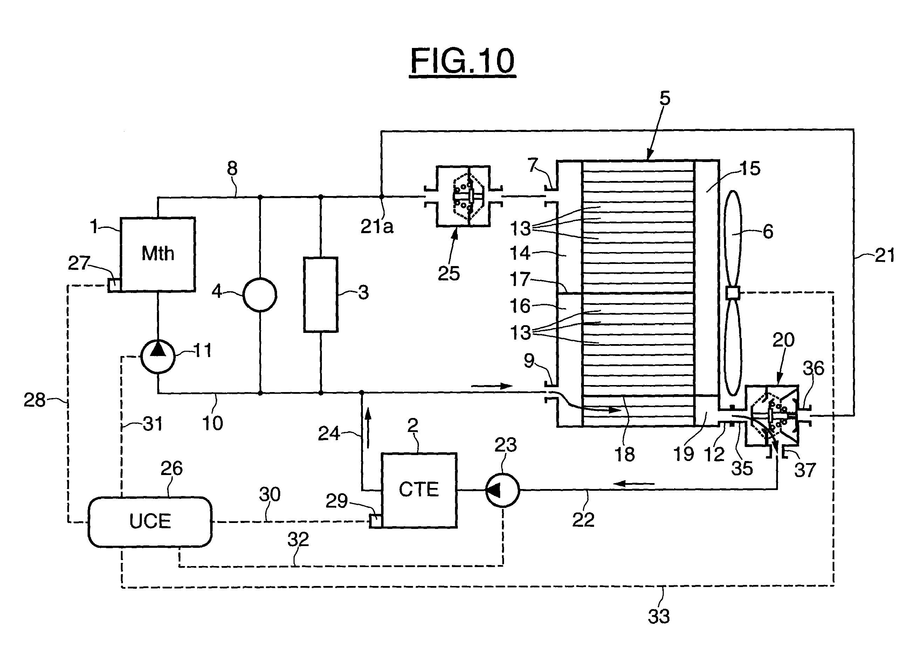

La figure 10 illustre l'écoulement du fluide caloporteur dans le cas d'un fonctionnement électrique pur à chaud. Dans ce cas, la température du fluide caloporteur est supérieure à 80°C mais reste inférieure à 83 °C grâce au refroidissement effectué dans le circuit auxiliaire du radiateur 5 dont le ventilateur 6 a été mis en marche. La pompe de circulation 23 étant actionnée, le fluide caloporteur traverse la chaîne de traction électrique 2 puis revient par la conduite 24 et une partie de la conduite 10 sur le radiateur 5. Le fluide caloporteur pénètre par la sortie principale 9 du radiateur 5 et s'écoule donc à l'envers des cas précédents. Le fluide caloporteur traverse le circuit auxiliaire du radiateur 5 et ressort par la sortie auxiliaire 12 après avoir été convenablement refroidi. La vanne mélangeuse 20 est dans la position où elle bloque la deuxième entrée 36 et laisse au contraire ouverte la première entrée 35. La vanne thermostatique principale 25 est fermée.

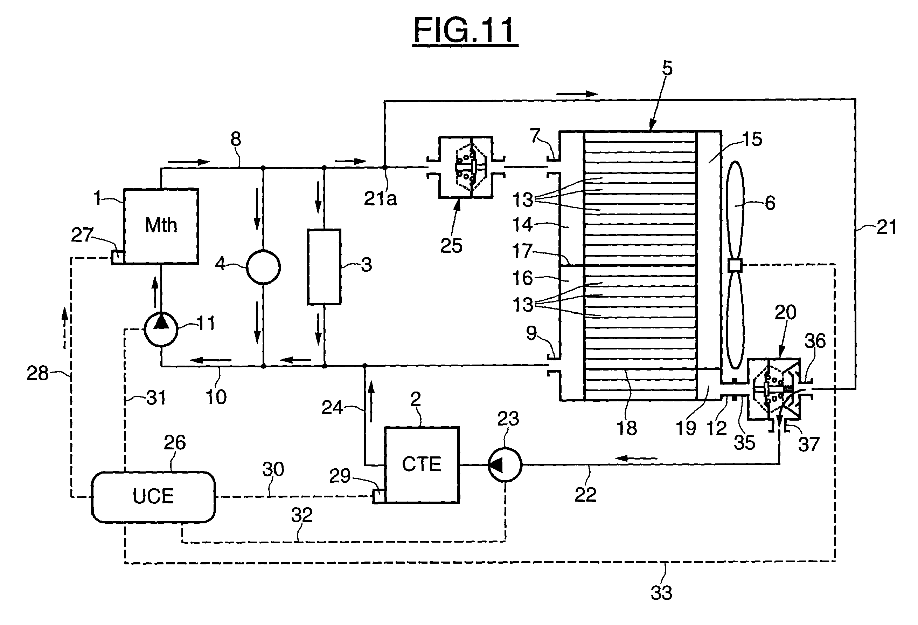

La figure 11 illustre l'écoulement du fluide caloporteur dans le cas d'un fonctionnement hybride à froid. Dans ce cas, la traction du véhicule est assurée à la fois par le moteur thermique 1 et par la chaîne de traction électrique 2. Les deux pompes de circulation 11 et 23 sont actionnées. Si le régime du moteur thermique, et donc de la pompe 11, est suffisant pour fournir le débit souhaité dans la chaîne de traction électrique 2, la pompe 23 peut ne pas être mise en fonctionnement. La température du fluide caloporteur est inférieure à 70°C. Dans ces conditions, la vanne mélangeuse 20 est dans la position où elle obture la première entrée 35 et libère la deuxième entrée 36. Le fluide caloporteur traverse donc la chaîne de traction électrique 2 par la dérivation 22 puis revient par la conduite 10 et traverse le moteur thermique 1. La vanne thermostatique principale 25 étant fermée, le fluide caloporteur passe par la dérivation 21 pour revenir sur la chaîne de traction électrique 2 en passant par la vanne mélangeuse 20. On notera que le bocal de dégazage 4 et le radiateur 3 sont également traversés par le fluide caloporteur, cette fois dans le même sens que sur les figures 7 et 8.

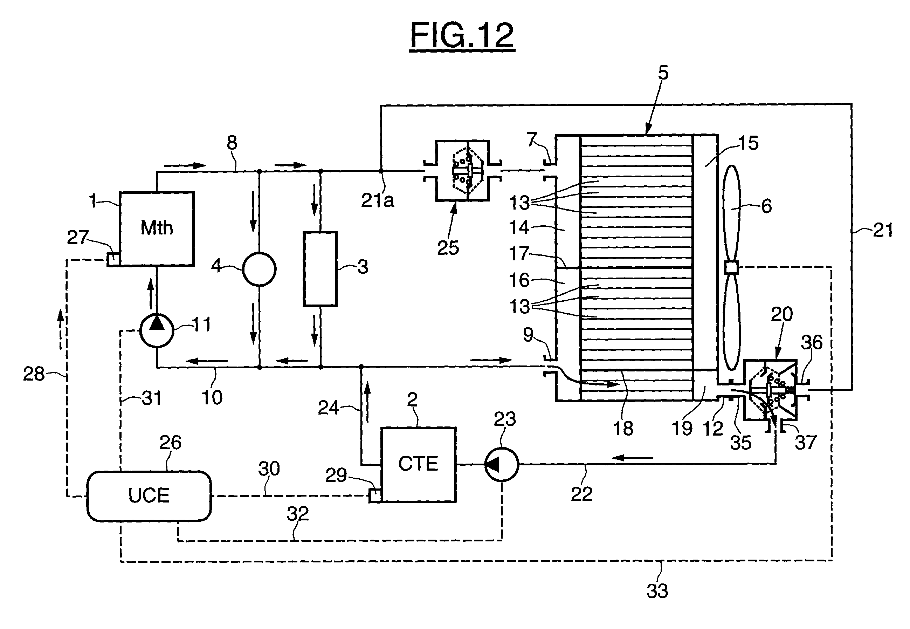

La figure 12 illustre le cheminement du fluide caloporteur dans le cas d'un fonctionnement hybride à chaud dans le cas où la température du fluide caloporteur est comprise entre 80°C et 83°C Comme précédemment, la traction du véhicule est assurée à la fois par le moteur thermique 1 et par la chaîne de traction électrique 2. Les deux pompes de circulation 11 et 23 sont en fonctionnement (sauf si le régime de la pompe 11 est suffisant, comme indiqué précédemment, auquel cas la pompe 23 peut ne pas être mise en fonctionnement). La vanne mélangeuse 20 est dans la position où elle bloque la deuxième entrée 36 étant donné que la température du fluide caloporteur qui la traverse est supérieure à 80°C. Au contraire, la vanne thermostatique principale 25 est en position fermée. Le fluide caloporteur traverse le circuit auxiliaire du radiateur 5 (le ventilateur 6 peut être mis en marche), de façon à être refroidi pour éviter toute détérioration des composants de la chaîne de traction électrique. Celle-ci est donc refroidie par le fluide caloporteur en provenance du circuit auxiliaire du radiateur 5, le fluide caloporteur rejoignant la branche de dérivation 22 en traversant la vanne mélangeuse 20.

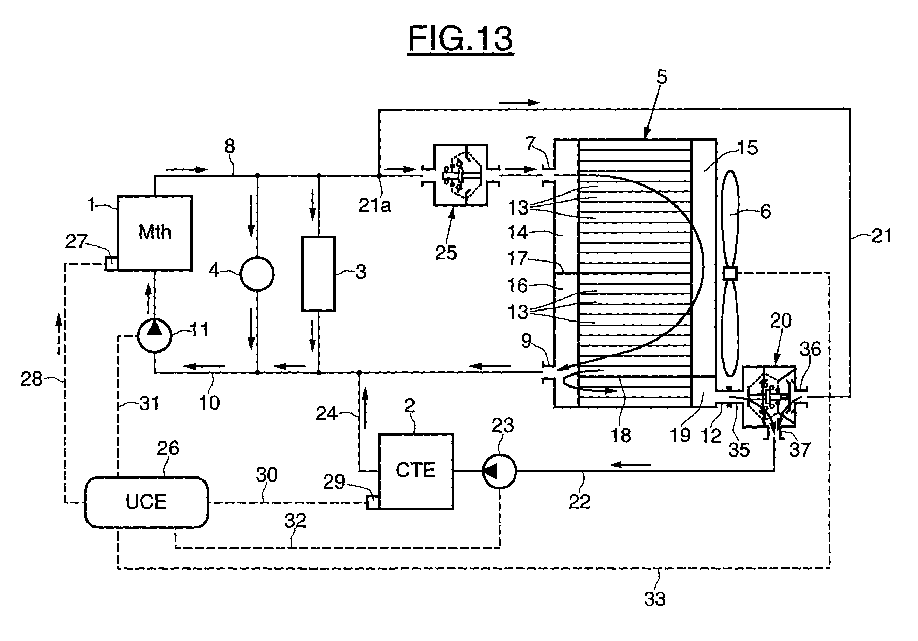

La figure 13 montre la circulation du fluide caloporteur dans le cas d'un fonctionnement hybride à température plus élevée. Dans ce cas, le fonctionnement étant le même que dans le cas de la figure 12, la température du fluide caloporteur a cette fois dépassé 83°C et a atteint 95°C par exemple, température à laquelle la vanne thermostatique principale 25 est complètement ouverte.

Les deux pompes de circulation 11 et 23 sont en fonctionnement (sauf si le régime de la pompe 11 est suffisant, comme indiqué précédemment, auquel cas on peut ne pas mettre la pompe 23 en fonctionnement).

Le fluide caloporteur s'écoule dans la boucle principale de refroidissement par les conduites 8 et 10 en traversant la vanne thermostatique principale 25. Le fluide caloporteur traverse le circuit principal du radiateur 5 en pénétrant par l'entrée 7 et en ressortant par la sortie principale 9. Le refroidissement du moteur thermique 1 est assuré convenablement grâce à l'ouverture de la vanne thermostatique 25 et au refroidissement effectué par le circuit principal du radiateur 5.

Le fluide caloporteur subit cependant un refroidissement plus important en traversant également le circuit auxiliaire du radiateur 5. Le fluide caloporteur qui a subi un tel refroidissement supplémentaire s'écoule par la sortie auxiliaire 12 du radiateur 5 et vient se mélanger dans la vanne mélangeuse 20 avec le fluide caloporteur provenant de la dérivation 21. Le mélange de ces deux fluides à températures différentes maintient la vanne thermostatique mélangeuse 20 dans sa position intermédiaire telle qu'illustrée sur la figure 3 ou dans la position représentée à la figure 4. Le fluide caloporteur issu de la vanne mélangeuse 20 se trouve donc à une température comprise entre 70 et 80°C. Cette température est adaptée au refroidissement de la chaîne de traction électrique 2.

On comprend que grâce à la disposition particulière des différents éléments du système de refroidissement de l'invention tel qu'il a été décrit, il soit possible d'obtenir un refroidissement optimal du moteur thermique et de la chaîne de traction électrique dans toutes les conditions de fonctionnement ainsi qu'un préchauffage et un maintien en température du moteur thermique lors d'un fonctionnement électrique pur.

La disposition de la vanne thermostatique principale à la sortie du moteur thermique permet d'utiliser un thermostat de type classique simplifiant ainsi la conception et la construction d'un système de refroidissement pour chaîne de traction hybride de véhicule automobile.

## Revendications

1. Système de refroidissement pour chaîne de traction hybride de véhicule automobile comprenant un moteur thermique (1) et une chaîne de traction électrique (2), pouvant être refroidis par un fluide caloporteur circulant dans un circuit de refroidissement comportant un radiateur (5) capable de refroidir le fluide caloporteur par échange thermique avec un flux d'air, le radiateur présentant un circuit principal avec une entrée (7) reliée à la sortie du moteur thermique et une sortie principale (9) reliée à l'entrée du moteur thermique, et un circuit auxiliaire communicant avec le circuit principal et muni d'une sortie auxiliaire (12), une vanne mélangeuse thermostatique à trois voies (20) étant reliée d'une part à la sortie auxiliaire (12) du radiateur et d'autre part à une branche de dérivation (21) du fluide provenant du moteur thermique, la dite vanne mélangeuse étant également reliée par une sortie (37) à la chaîne de traction électrique (2), **caractérisé par le fait que** le circuit de refroidissement comprend, dans une branche reliant la sortie du moteur thermique (1) au radiateur (5), une vanne thermostatique principale (25), ladite vanne principale étant montée entre le piquage de la branche de dérivation (21) et le radiateur (5).

2. Système de refroidissement selon la revendication 1 **caractérisé par le fait que** la vanne mélangeuse thermostatique à trois voies (20) est du type à double effet, ladite vanne bloquant le passage (35) vers la sortie auxiliaire (12) du radiateur lorsque la température du fluide caloporteur qui la traverse est inférieure à une première température, bloquant le passage (36) en provenance du moteur thermique lorsque la température du fluide caloporteur qui la traverse est supérieure à une deuxième température et réalisant un mélange du fluide caloporteur en provenance du moteur thermique et du circuit auxiliaire du radiateur, lorsque la température du fluide caloporteur qui la traverse est comprise entre la première et la deuxième température.

3. Système de refroidissement selon la revendication 2 **caractérisé par le fait que** la vanne thermostatique principale (25) est adaptée pour bloquer le passage du fluide caloporteur lorsque sa température est inférieure à une troisième température supérieure à la deuxième température et pour s'ouvrir lorsque la température du fluide caloporteur qui la traverse est supérieure à une quatrième température supérieure à la troisième température.

4. Système de refroidissement selon l'une quelconque des revendications 1 à 3 **caractérisé par le fait que** le circuit de refroidissement comprend une boucle principale (8,10) incluant le moteur thermique (1), une première pompe de circulation (11), le circuit principal du radiateur (5) et la vanne thermostatique principale (25).

5. Système de refroidissement selon la revendication 4 **caractérisé par le fait que** des branches de dérivation sont montées en parallèle sur la boucle principale pour un échange thermique dans des organes auxiliaires tels qu'un radiateur de chauffage (3) de l'habitacle du véhicule et/ou un bocal de dégazage (4) pour le fluide caloporteur.

6. Système de refroidissement selon les revendications 4 ou 5 **caractérisé par le fait que** le circuit de refroidissement comprend une boucle secondaire (22) incluant la chaîne de traction électrique (2), une deuxième pompe de circulation (23), le circuit auxiliaire du radiateur et la vanne mélangeuse (20).

7. Système de refroidissement selon la revendication 6 **caractérisé par le fait qu'**il comprend une unité de commande (26) recevant des informations sur la température du fluide caloporteur en différents points du système et capable d'actionner sélectivement les pompes de circulation et/ou un ventilateur (6) associé au radiateur.
